# EUROPÄISCHE PATENTSCHRIFT

(11) **EP 0 674 294 B1**
(45) Veröffentlichungstag und Bekanntmachung des Hinweises auf die Patenterteilung: **03.09.1997**
(21) Anmeldenummer: 95103901.5
(22) Anmeldetag: 16.03.1995
(51) Int. Cl.: G07C 5/08, G01S 5/14

(54) **Kraftfahrzeug mit einer Fahrtroutenaufzeichnungseinrichtung**
Motor vehicle with a device for recording a driving route
Véhicule à moteur avec un dispositif pour enregistrer une route

(30) Priorität: 22.03.1994 DE 4409865
(43) Veröffentlichungstag der Anmeldung: 27.09.1995
(73) Patentinhaber: Schmidt Holding Europe GmbH, D-79837 St. Blasien (DE)
(72) Erfinder: Schneider, Michael J., D-79865 Grafenhausen-Rothaus (DE); Reeb, Hans Peter, D-79868 Feldberg (DE); Schüler, Klaus Otto Paul, D-79837 St. Blasien (DE)
(74) Vertreter: Grättinger & Partner

(56) Entgegenhaltungen:
- EP-A- 0 249 487
- EP-A- 0 450 325
- EP-A- 0 508 405
- US-A- 4 949 268

## Beschreibung

Die vorliegende Erfindung betrifft ein Kraftfahrzeug, insbesondere Straßendienstfahrzeug, mit einer Einrichtung zur Fahrtroutenaufzeichnung.

Für eine Vielzahl von Kraftfahrzeugen ist es wünschenswert, daß die bei einem Einsatz gefahrene Route aufgezeichnet wird. Dies trifft beispielsweise für Streifendienstfahrzeuge mit einer vorgegebenen Einsatzroute zu. In gleicher Weise gilt es beispielsweise für Streifenwagen, Werttransporte, Gefahrguttransporte sowie zahlreiche andere Kraftfahrzeuge. Das Bedürfnis nach einer Aufzeichnung der Fahrtroute ergibt sich nicht allein aus dem grundsätzlich steigenden Bedürfnis nach Kontrolle und dem Bestreben, die mißbräuchliche und unbefugte Benutzung von Kraftfahrzeugen zu verhindern; es nimmt insbesondere auch durch die ständig schärfer werdenden Bestimmungen zur Haftung zu, die beispielsweise beim Einsatz von Streufahrzeugen im Winterdienst eine Dokumentation der tatsächlich gefahrenen Einsatzroute geboten erscheinen lassen.

Es ist bekannt, daß bei einem Streufahrzeug für den Winterdienst die Teilstrecken einer vorgegebenen Einsatzroute in einer Protokolliereinrichtung fest einprogrammiert sind. Der Fahrer muß in diesem Fall an bestimmten Streckenpunkten durch Knopfdruck den Abschluß eines vorgegebenen Streckenabschnitts bestätigen. Bereits diese Bestätigung einzelner Streckenabschnitte lenkt den Fahrzeugführer von der Bedienung des Fahrzeugs ab; denn er muß sich auf die vorgegebenen Grenzen der Streckenabschnitte konzentrieren. Dennoch ist, sofern die vorgegebene Route eingehalten wird, diese Form der Routenprotokollierung, obwohl nicht sehr komfortabel, noch praktikabel. Ein Abweichen von der vorgesehenen Route kann mit diesem System jedoch nicht ohne weiteres protokolliert werden; hier muß der Fahrzeugführer die tatsächliche Route von Hand notieren oder aber die gefahrenen Teilstrecken von Hand aus einem Speicher abrufen. Beide Möglichkeiten sind zeitaufwendig und lenken den Fahrzeugführer in noch stärkerem Maße als ohnehin von der Bedienung des Fahrzeugs ab. Bei einem späteren Wiedereinsteigen in die vorprogrammierte Route ergeben sich zusätzlich Probleme. "

Aus der DE-A-4130367 ist bekannt, zur Protokollierung der Fahrtroute eines Fahrzeuges einen GPS-Empfänger, eine hieran angeschlossene Datenverarbeitungseinheit und einen an diese angeschlossenen GPS-Datenspeicher einzusetzen. Dabei werden in der Datenverarbeitungseinheit die GPS-Positionsdaten einer Plausibilitätsprüfung unterzogen. Hintergrund hierfür ist, daß bei ungünstigen Empfangsbedingungen (z.B. Gebirge, Stadtbereich, dichter Schneefall) durch Reflexionen und/oder sonstige Effekte die GPS-Positionsdaten beträchtliche Fehler enthalten können. Ergibt die Plausibilitäts-prüfung, daß die durch das GPS-Positionsdetektorsystem bestimmte Fahrzeugposition nicht der tatsächlichen Position entsprechen kann, schaltet die Datenverarbeitungseinheit selbsttätig auf ein parallel zum GPS-Positionsdetektorsystem betriebenes Koppelnavigationssystem um, und die aus diesem System ermittelten Positionsdaten werden aufgezeichnet.

Nachteilig an diesem System ist insbesondere die unbefriedigende Genauigkeit des Koppelnavigationssystems. Diese kann, wenn das GPS-Positionsdetektorsystem über einen längeren Zeitraum (z.B. bei anhaltendem dichten Schneefall) keine brauchbaren Positionsdaten liefert, zu einem insgesamt nicht verwertbaren Fahrtroutenprotokoll führen.

Bei Streufahrzeugen im Winterdienst ist es desweiteren bekannt, Streudaten wie insbesondere die Streudichte, Streubreite, Streubildlage und Art des verwendeten Streustoffes der jeweiligen Uhrzeit zugeordnet aufzuzeichnen. Dies dient in Verbindung mit dem dem Einsatz zugrundeliegenden Streckenplan zum Nachweis der Streuung auf einer bestimmten Strecke. Das hieraus erstellbare Streuprotokoll kann nicht nur im Falle der Geltendmachung von Haftungsansprüchen verwendet werden; es dient auch der Abrechnung des Streueinsatzes bei Lohnunternehmen.

Für Fälle, bei denen eine vorgegebene Einsatzroute strikt eingehalten wird, ist diese Form der Streudatenprotokollierung durchaus brauchbar. Wie die bekannte Routenprotokollierung versagt sie jedoch, wenn das Streufahrzeug von der vorgegebenen Route abweichen muß, beispielsweise um bei einer Straßensperrung oder dergleichen auszuweichen oder aber einen ganz bestimmten außerplanmäßigen Punkt, an dem gestreut werden muß, anzufahren.

Aus der EP-A-249 487 ist ein System bekannt, bei dem durch mehrere stationär innerhalb eines abgegrenzten Geländes aufgestellte Richtposten die Positionen von innerhalb jenes Geländes bewegten Arbeitsfahrzeugen ermittelt werden. Zugleich werden Betriebsdaten des jeweiligen Fahrzeugs gesammelt und mit den Positionsdaten korreliert. Der Datensatz wird, um eine Optimierung des Einsatzes der Fahrzeuge zu ermöglichen, an eine Zentrale übermittelt. Dieses System ist beschränkt auf den Einsatz von Fahrzeugen auf einem begrenzten, mit Posten bestücktem Arbeitsgelände.

Die WO 92/05505 beschreibt eine fahrzeugfeste Einrichtung, welche dem Fahrzeugführer angibt, wie er das Fahrzeug steuern muß, damit es auf einem vorgegebenen Kurs fährt. Hierzu umfaßt die Einrichtung eine Einheit, die über - beispielsweise von einem Satelliten abgestrahlte - empfangene Signale die aktuelle Position des Fahrzeugs bestimmt. Der gewünschte Kurs wird in die Einrichtung manuell eingegeben. Diese Einrichtung ist naturgemäß nur bei frei steuerbaren Fahrzeugen wie Flugzeugen und Schiffen einsetzbar. Eine Dokumentation der tatsächlichen Route erfolgt nicht.

Der vorliegenden Erfindung liegt die Aufgabe zugrunde, ein Kraftfahrzeug mit einer Einrichtung zur Fahrtroutenaufzeichnung zu schaffen, bei dem bei Einsätzen auf und abseits von vorgegebenen Strecken zuverlässig ein umfassendes Einsatzroutenprotokoll erstellt wird, ohne daß insbesondere bei Abweichungen von einer vorgegebenen Strecke und/oder sonstigen außergewöhnlichen Umständen die Aufmerksamkeit des Fahrzeugführers in nennenswertem Maß in Anspruch genommen wird.

Gemäß der vorliegenden Erfindung wird diese Aufgabe durch die folgenden Merkmale gelöst:
- Es ist ein Satellitenempfänger vorgesehen, der fortlaufend der momentanen Position des Fahrzeuges entsprechende Positionsdaten ermittelt;
- der Satellitenempfänger ist mit einer zentralen Datenverarbeitungseinheit verbunden;
- mit der zentralen Datenverarbeitungseinheit ist darüber hinaus ein ein Mikrophon umfassendes Sprachmodul verbunden;
- es ist ein Signalelement vorgesehen, das bei Ausbleiben verwertbarer Positionsdaten aktiviert wird;
- das Sprachmodul ist bei Ausbleiben verwertbarer Positionsdaten mittels eines Schalters auf die zentrale Datenverarbeitungseinheit schaltbar;
- die zentrale Datenverarbeitungseinheit umfaßt mindestens eine Speichereinrichtung (Istroutenspeicher), in der die vom Satellitenempfänger ermittelten Positionsdaten und beim Ausbleiben solcher die über das Sprachmodul eingegebenen Routeninformationen abgespeichert werden.

Gemäß der Erfindung werden somit im Normalfall, d. h. bei günstigen Empfangsbedingungen die von dem Satellitenempfänger ermittelten Positionsdaten dem Istroutenspeicher zugeführt. Indem zusätzlich zum Satellitenempfänger ein Sprachmodul vorgesehen ist, trägt die Erfindung jedoch auch dem Umstand rechnung, daß der Satellitenempfänger unter ungünstigen Umständen keine zuverlässigen, verwertbaren Positionsdaten zur Verfügung stellen kann; dies ist beispielsweise bei einer ungünstigen Satellitenkonfiguration der Fall, kann jedoch auch von schlechten Empfangsbedingungen herrühren, beispielsweise bei ungünstigen Witterungsverhältnissen (Regen, Schnee) oder wenn das Fahrzeug durch Alleen, durch Häuserschluchten, auf engen Talstraßen oder durch Tunnels fährt. Immer dann, wenn aufgrund derartiger ungünstiger Umstände der Satellitenempfänger keine plausiblen, verwertbaren Positionsdaten zur Verfügung stellt, wird dies dem Fahrer durch das sich selbsttätig einschaltende Signalelement (optisch, akkustisch oder dgl.) angezeigt. Für den Zeitraum, in dem der Satellitenempfänger plausible Positionsdaten nicht liefert, wird über einen Schalter das Sprachmodul auf die zentrale Datenverarbeitungseinheit geschaltet, und diese speichert auf dem Istroutenspeicher die vom Fahrzeugführer in das Mikrophon des Sprachmoduls gesprochene Routeninformation. Auf diese Weise ist, ohne daß der Fahrzeugführer in nennenswerter Weise von der Bedienung des Fahrzeuges abgelenkt würde, eine kontinuierliche Protokollierung der Einsatzroute sichergestellt, indem fortlaufend entweder die vom Satellitenempfänger ermittelten Positionsdaten oder aber die vom Fahrzeugführer in das Mikrophon gesprochenen Routeninformationen abgespeichert werden.

Besonders zweckmäßig ist es dabei, wenn der das Sprachmodul auf die zentrale Datenverarbeitungseinheit schaltende Schalter selbsttätig betätigt wird, wenn der Satellitenempfänger keine plausiblen, verwertbaren Positionsdaten ermittelt. In diesem Falle ergibt sich eine maximal mögliche Entlastung des Fahrzeugführers. Jedoch kann im Rahmen der Erfindung auch vorgesehen sein, daß der Fahrzeugführer, wenn das Signalelement das Ausbleiben verwertbarer Positionsdaten signalisiert, eine Mikrophontaste von Hand betätigt.

Der Istroutenspeicher kann zur Abspeicherung der vom Fahrzeugführer in das Mikrophon gesprochenen Routeninformationen ein herkömmliches analoges Aufzeichnungsgerät umfassen. Bei einer besonders bevorzugten Weiterbildung der Erfindung umfaßt das Sprachmodul jedoch einen Sprachprozessor, der einen AD-Wandler aufweist. Durch den AD-Wandler werden die in das Mikrophon gesprochenen Routeninformationen digitalisiert und können dadurch auf gleiche Weise abgespeichert werden wie die vom Satellitenempfänger bereitgestellten Positionsdaten. Der Datensatz, der aus der digitalisierten, vom Fahrer in das Sprachmodul gesprochenen Routeninformation hervorgeht, fügt sich nahtlos in das Protokoll ein, das laufend erstellt wird. Insbesondere vereinfacht dies die Auswertung des im Istroutenspeicher aufgezeichneten Routenprotokolls. Denn die auf dem selben Speichermedium (z. B. Chipkarte) abgespeicherten, die Fahrtroute definierenden Daten können von ein und demselben Lesegerät in eine stationäre Datenverarbeitungsanlage eingelesen werden, in der die Daten, unabhängig davon, ob es sich um vom Satellitenempfänger ermittelte Positionsdaten oder um vom Fahrzeugführer in das Mikrophon gesprochene Routeninformationen handelt, digital auf Harddisk, Diskette oder Bandlaufwerken abgespeichert werden.

Wird nach dem Einsatz von der stationären, beispielsweise in der Straßenmeisterei installierten Datenverarbeitungsanlage ein schriftliches Protokoll über den Einsatz ausgedruckt, werden die aus dem Sprachmodul herrührenden Datensätze über einen in das Lesegerät integrierten DA-Wandler umgesetzt, und die akustisch wahrnehmbaren Routeninformationen können von Hand über eine Tastatur in das schriftliche Protokoll eingefügt werden. Hierzu hält das den Protokollausdruck erstellende Programm an, wenn ein Datensatz beginnt, der von dem Sprachmodul herrührt.

Eine bevorzugte Weiterbildung der Erfindung betrifft ein Kraftfahrzeug, das vorrangig zum Einsatz auf einer vorgegebenen Route vorgesehen ist. Dabei ist vorgesehen, daß die zentrale Datenverarbeitungseinheit eine Vergleichseinheit umfaßt, in der laufend die vom Satellitenempfänger ermittelten Positionsdaten mit Sollroutendaten verglichen werden, die in einem Sollroutenspeicher abgespeichert sind. Dabei werden in dem Istroutenspeicher nur die über das Sprachmodul eingegebenen sowie diejenigen vom Satellitenempfänger ermittelten Positionsdaten abgespeichert, die nicht mit den im Sollroutenspeicher abgespeicherten Orts- bzw. Wegdaten übereinstimmen.

Ein wesentlicher Aspekt dieser Weiterbildung der Erfindung ist somit, daß nicht sämtliche vom Satellitenempfänger ermittelten Positionsdaten des Fahrzeuges zur Erstellung des Routenprotokolls abgespeichert werden, sondern vielmehr nur diejenigen Positionsdaten, welche nicht mit vorgegebenen Routendaten übereinstimmen. Solange sich das Fahrzeug an die vorgegebene Einsatzroute, wie sie im Sollroutenspeicher abgespeichert ist, hält, erfolgt keine Aufzeichnung der vom Satellitenempfänger ermittelten Positionsdaten. Hierdurch kann die Speicherkapazität des Istroutenspeichers optimal genutzt werden. Das Protokoll über die tatsächlich gefahrene Einsatzroute des erfindungsgemäßen Fahrzeuges läßt sich nach Abschluß des Einsatzes durch Überlagerung der Daten des Istroutenspeichers und des Sollroutenspeichers bei Priorität der Daten des Istroutenspeichers ermitteln.

Beim einem mit einem Sollroutenspeicher ausgestatteten erfindungsgemäßen Kraftfahrzeug lassen sich in besonders einfacher Weise mehrere weitere Möglichkeiten der Datenverarbeitung realisieren, welche den Fahrer des Fahrzeuges entlasten und/oder den Einsatz zuverlässiger machen und/oder die Dokumentation des Einsatzes des Kraftfahrzeuges verbessern. So kann das Kraftfahrzeug mit einer Anzeigeeinheit ausgerüstet sein, welche der Anzeige der jeweils bevorstehenden, sich aus dem im Sollroutenspeicher abgespeicherten Orts- bzw. Wegdaten ergebenden Sollroute dient. Eine derartige Anzeigeeinheit informiert somit den Fahrzeugführer ständig, in Abhängigkeit von der augenblicklichen Position, über die bevorstehende Sollroute. Der Fahrzeugführer braucht sich in diesem Falle nicht regelmäßig anhand schriftlicher Aufzeichnungen oder dergleichen über den Verlauf der Einsatzroute zu vergewissern. Es versteht sich, daß die Anzeigeeinheit nur dann die bevorstehende Sollroute anzeigen kann, wenn sich das Fahrzeug auf der Sollroute befindet; wird hingegen in der Vergleichseinheit eine Abweichung zwischen der Sollroute und der Istposition festgestellt, kann der Fahrzeugführer mittels der Anzeigeeinheit nicht über die unmittelbar bevorstehende Route informiert werden. Im letzteren Fall wird in der Anzeigeeinheit zweckmäßigerweise der Ort angegeben, an welchem die Sollroute verlassen wurde, so daß der Fahrzeugführer nach Möglichkeit an diesem Punkt wieder in die Sollroute einsteigen kann.

Die Vorteile eines solchen, mit einem Sollroutenspeicher ausgerüsteten Fahrzeuges kommen in besonderem Maße dann zum Tragen, wenn dieses darüberhinaus mit einem Sollbetriebsdatenspeicher ausgerüstet ist, in welchem Sollbetriebsdaten eines dem Fahrzeug zugeordneten Arbeitsaggregates, beispielsweise eines Streuaggregaden Orts- bzw. Wegdaten des Sollroutenspeichers zugeordnet abgespeichert sind. Solange sich das Fahrzeug, vom Satellitenempfänger und der Vergleichseinheit überwacht, auf der Sollroute befindet, kann bei einer derartigen Ausgestaltung des erfindungsgemäßen Fahrzeuges das Arbeitsaggregat automatisch an den augenblicklichen Einsatzort angepaßt werden. Bei einem Streufahrzeug ist insbesondere die automatische Anpassung der Streubreite, Streudichte und der Lage des Streubildes an den augenblicklichen Einsatzort möglich. Beispielskann auf diese Weise an Gefahrpunkten wie Kreuzungen oder Brücken die Streudichte automatisch erhöht werden. Hierdurch wird der Fahrzeugführer von dem bisher üblichen Einstellen dieser Daten von Hand entlastet. Beim Verlassen der Sollroute (Abweichen der vom Satellitenempfänger ermittelten Positionsdaten von den Orts- bzw. Wegdaten des Sollroutenspeichers) kann der Fahrzeugführer diese Betriebsdaten über das Bedienpult von Hand einstellen bzw. korrigieren.

Es versteht sich, daß die vorstehend beschriebenen Vorteile der einen Sollroutenspeicher umfassenden Weiterbildung der Erfindung im wesentlichen nur dann zum Tragen kommen, wenn der Satellitenempfänger verwertbare Positionsdaten liefert. Für diejenigen Streckenabschnitte, auf denen die Fahrtroutenaufzeichnung über das Sprachmodul erfolgt, ist ein Vergleich der Istroute mit der Sollroute nicht ohne weiteres möglich. Somit entfällt auf diesen Streckenabschnitten beispielsweise die automatische Bedienung von Aggregaten über abgespeicherte Sollbetriebsdaten.

Anstelle der vorstehend beschriebenen automatischen Steuerung des Arbeitsaggregates mittels einer Steuereinheit kann auch vorgesehen sein, daß die im Sollbetriebsdatenspeicher abgespeicherten Sollbetriebsdaten des Arbeitsaggregats bzw. wahlweise die aktuellen Betriebsdaten dem Fahrzeugführer in Abhängigkeit von der augenblicklichen Position des Fahrzeuges auf einer Anzeigeeinheit angezeigt werden. In Abhängigkeit der tatsächlichen Fahrzeugposition wird dann dem Fahrzeugführer, solange sich das Fahrzeug auf der vorgegebenen Sollroute bewegt, auf der Anzeigeeinheit mitgeteilt, auf welche Betriebsdaten er das Arbeitsaggregat manuell einzustellen hat.

Im Falle des Verlassens der Sollroute werden die Ist-Betriebsdaten angezeigt, die durch die Einstellung am Bedienpult vorgegeben werden.

Ein mit einem Arbeitsaggregat ausgestattes erfindungsgemäßes Fahrzeug verfügt zweckmäßigerweise über einen Istbetriebsdatenspeicher, welcher die den jeweiligen Positionsdaten des Fahrzeuges zugeordneten Istbetriebsdaten des Arbeitsaggregats zur Erstellung eines Betriebsdatenprotokolls aufzeichnet. Durch Abfrage des Istroutenspeicher sowie des Istbetriebsdatenspeichers läßt sich durch Überlagerung für jeden Einsatz des Fahrzeuges ein umfassendes Einsatzprotokoll erstellen. Von Vorteil ist dabei insbesondere, daß infolge der Zuordnung der Betriebsdaten zur jeweiligen Fahrzeugposition mögliche Unterbrechungen ohne Einfluß auf die Aussagekraft des Protokolls sind. Werden hingegen, wie beim Stand der Technik, die Betriebsdaten der Uhrzeit zugeordnet, ergeben sich durch Unterbrechungen des Einsatzes Verschiebungen des Protokolls, die eine nachträgliche Zuordnung der Betriebsdaten zu jeweiligen Streckenabschnitten unmöglich machen.

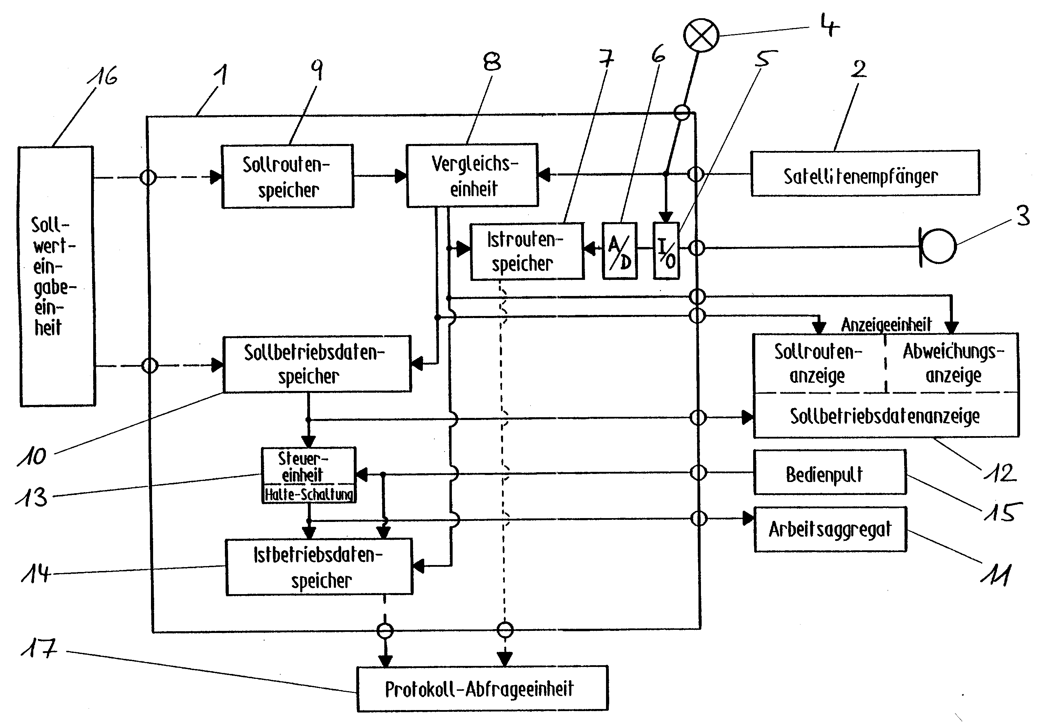

Im folgenden wird die Erfindung anhand der Zeichnung näher erläutert. Diese zeigt schematisch ein bevorzugtes Ausführungsbeispiel einer Einrichtung zur tenüberwachung und -aufzeichnung eines erfindungsgemäßen Kraftfahrzeuges, welche auch zur Steuerung eines Arbeitsaggregats sowie zur Aufzeichnung von dessen Betriebsdaten geeignet ist.

Um in die zentrale Datenverarbeitungseinheit 1 des Fahrzeuges diejenigen Daten, die die tatsächlich gefahrene Route dokumentieren, einzuspeisen, bestehen zwei Möglichkeiten. Im Normalfall, d. h. bei günstigen Empfangsbedingungen des Satellitenempfängers 2, liefert dieser die der jeweiligen Fahrzeugposition entsprechenden Positionsdaten. Nur für solche Streckenabschnitte, auf denen der Satellitenempfänger 2 aufgrund ungünstiger Empfangsbedingungen keine verwertbaren Positionsdaten liefert, ist in der Fahrzeugkabine ein Mikrophon 3 vorgesehen. Dieses Mikrophon nimmt die vom Fahrzeugführer gesprochenen Routeninformationen auf und leitet sie der zentralen Datenverarbeitungseinheit 1 zu.

Um den Fahrzeugführer zu informieren, wann er Fahrtrouteninformationen in das Mikrophon 3 sprechen muß, ist in dem Führerhaus eine Signallampe 4 vorgesehen. Diese leuchtet auf, wenn der Satellitenempfänger 2 keine verwertbaren Positionsdaten bereitstellt. Zugleich, d. h. wenn verwertbare Positionsdaten des Satellitenempfängers 2 ausbleiben, wird der Schalter 5 betätigt, so daß das Mikrophon 3 über den AD-Wandler 6 auf den als Chipkartenschreiber ausgebildeten Istroutenspeicher 7 geschaltet ist.

Bei dem in der Zeichnung dargestellten Ausführungsbeispiel ist zur optimalen Nutzung der Speicherkapazität des Istroutenspeichers 7 eine weiter unten im Detail beschriebene Vergleichseinheit 8 vorgesehen, welche die tatsächlich gefahrene Route mit einer vorgegebenen Route vergleicht und nur dann die vom Satellitenempfänger 2 bereitgestellten Positionsdaten auf dem Istroutenspeicher 7 ablegt, wenn diese von den abgespeicherten Sollroutendaten abweichen. Es versteht sich, daß bei Ausführungsformen der Erfindung, bei denen eine derartige Vergleichseinheit 8 nicht vorgesehen ist, der Satellitenempfänger 2 unmittelbar mit dem Istroutenspeicher 7 verbunden ist.

Die nachfolgende Beschreibung der in der Zeichnung dargestellten Einrichtung zur Fahrtroutenüberwachung und -aufzeichnung gilt für den Fall, daß der zentralen Datenverarbeitungseinheit 1 vom Satellitenempfänger 2 verwertbare Positionsdaten zur Verfügung gestellt werden. Ist dies infolge ungünstiger Empfangsbedingungen oder aus anderen Gründen nicht gewährleistet, speist also der Fahrzeugführer die Routeninformationen in die zentrale Datenverarbeitungseinheit 1 über das vom Sprachmodul umfaßte Mikrophon 3 ein, lassen sich die nachstehend beschriebenen automatischen Funktionen nicht ohne weitere verwirklichen.

In einem Sollroutenspeicher 9 ist eine Sequenz von Orts- bzw. Wegedaten abgespeichert, welche die Sollroute eines Arbeitseinsatzes wiedergibt. Die augenblickliche Istposition des Fahrzeuges wird demgegenüber, solange die Empfangsbedingungen dies zulassen, von dem Satellitenempfänger 2 ermittelt. In der Vergleichseinheit 8 werden ständig die vom Satellitenempfänger ermittelten Positionsdaten mit den vorgegebenen Sollroutendaten verglichen.

Bewegt sich das Fahrzeug auf der Sollroute, stimmen demgemäß die Positionsdaten mit den Sollroutendaten überein, werden vom Sollbetriebsdatenspeicher 10 die Sollbetriebsdaten für das Arbeitsaggregat 11 abgerufen. In der Anzeigeeinheit 12 wird zugleich angezeigt, daß sich das Fahrzeug auf der Sollroute befindet und wie die unmittelbar bevorstehende Sollroute verläuft (Sollroutenanzeige), als auch mit welchen Betriebsdaten das Arbeitsaggregat 11 bei der momentanen Position des Fahrzeuges zu betreiben ist (Sollbetriebsdatenanzeige). Zugleich werden die Sollbetriebsdaten der Steuereinheit 13 zugeführt, welche das Arbeitsaggregat 11 in Abhängigkeit von den Sollbetriebsdaten steuert. Solange sich das Fahrzeug, von der Vergleichseinheit 8 ermittelt, auf der vorgegebenen Route (Sollroute) bewegt, wird somit das Arbeitsaggregat 11 automatisch entsprechend den abgespeicherten Sollbetriebsdaten gesteuert.

Wird in der Vergleichseinheit festgestellt, daß das Fahrzeug die Sollroute verlassen hat, wird der Fahrzeugführer hiervon über die Anzeigeeinheit 12 informiert (Abweichungsanzeige). Desweiteren wird die vom Satellitenempfänger 2 ermittelte tatsächliche Fahrtroute, solange sie von der Sollroute abweicht, im Istroutenspeicher 7 aufgezeichnet. Und es wird schließlich der Istbetriebsdatenspeicher 14 aktiviert, so daß er die Istbetriebsdaten des Arbeitsaggregates 11 für die Dauer der Abweichung der Istroute von der Sollroute aufzeichnet.

Solange nicht der Fahrzeugführer über das Bedienpult 15 auf die Betriebsweise des Arbeitsaggregates 11 Einfluß nimmt, sorgt eine der Steuereinheit 13 zugeordnete Halteeinheit dafür, daß das Arbeitsaggregat 11 weiterhin mit den zuletzt gültigen Sollbetriebsdaten betrieben wird.

Um auf besondere, unvorhergesehene Situationen, welche in den abgespeicherten Sollbetriebsdaten nicht berücksichtigt sind, eingehen zu können, kann der Fahrzeugführer auch beim Befahren der Sollroute jederzeit die Betriebsdaten des Arbeitsaggregates 11 von Hand verändern. Wird auf diese Weise die automatische Steuerung des Arbeitsaggregates außer Kraft gesetzt, wird der Istbetriebsdatenspeicher aktiviert, so daß er die von Hand am Bedienpult 15 eingestellten Istbetriebsdaten aufzeichnet.

Um die zentrale Datenverarbeitungseinheit 1 für eine neue Einsatzroute des Fahrzeuges und/oder neue Einsatzbedingungen zu programmieren, ist eine Sollwerteingabeeinheit 16 vorgesehen, in welche beispielsweise Chipkarten oder Disketten eingelesen werden können. Mit ihr können die Sollroutendaten in den Sollroutenspeicher 9 und die Sollbetriebsdaten in den Sollbetriebsdatenspeicher 10 eingegeben werden. Nach Abschluß des Einsatzes können mittels der Protokoll-Abfrageeinheit 17 die im Istroutenspeicher 7 und im Istbetriebsdatenspeicher 14 aufgezeichneten Daten abgerufen werden. Das entsprechende Protokoll gibt die Einsatzroute, soweit sie von der Sollroute abweicht oder soweit der Satellitenempfänger keine verwertbaren Positionsdaten bereitstellte, sowie die Betriebsdaten des Arbeitsaggregates 11 für die im Istroutenspeicher gespeicherten sowie für solche Streckenabschnitte wieder, bei denen der Fahrzeugführer die Betriebsdaten des Arbeitsaggregates manuell vorgegeben hat. Das erstellte Protokoll läßt somit diejenigen Streckenabschnitte des Einsatzes unberücksichtigt, auf denen der Satellitenempfänger 2 verwertbare Positionsdaten liefert, sofern diese der Sollroute entsprechen, und auf denen das Arbeitsaggregat mit den Sollbetriebsdaten betrieben wurde. Zur Schonung der Speicherkapazität wird ein Einsatz, solange er planmäßig verläuft, somit nicht protokolliert.

Wird von der vorstehend beschriebenen, zur Schonung der Speicherkapazität des Istroutenspeichers 7 vorgesehenen Schaltung in der Weise abgewichen, daß die Einsatzroute fortlaufend aufgezeichnet wird, werden dem Istroutenspeicher 7, solange der Satellitenempfänger 2 verwertbare Positionsdaten bereitstellt, diese zugeführt. Für solche Streckenabschnitte, auf denen dieses nicht der Fall ist, gibt der Fahrzeugführer über das mittels des Schalters 5 selbsttägig eingeschaltete Mikrophon dann, wenn die Signallampe 4 leuchtet, die Straßennamen oder sonstigen zur Identifizierung der Fahrtroute geeigneten Bezeichnungen über das Mikrophon 3 in den Istroutenspeicher 7 ein. Die von dem als Istroutenspeicher vorgesehenen Chipkartenschreiber beschriftete Chipkarte wird am Ende des Einsatzes dem Chipkartenschreiber entnommen. Über den Chipkartenleser der stationären Datenverarbeitungsanlage (Protokoll-Abfrageeinheit) werden die Daten der Einsatzroute und ggf. der Betriebsdaten des Arbeitsaggregats 11 in die stationäre Datenverarbeitungsanlage eingelesen, weiterverarbeitet und gespeichert.

## Patentansprüche

1. Kraftfahrzeug, insbesondere Straßendienstfahrzeug, mit einer Einrichtung zur Fahrtroutenaufzeichnung mit folgenden Merkmalen:
- Es ist ein Satellitenempfänger (2) vorgesehen, der fortlaufend der momentanen Position des Fahrzeuges entsprechende Positionsdaten ermittelt;
- der Satellitenempfänger (2) ist mit einer zentralen Datenverarbeitungseinheit (1) verbunden;
- mit der zentralen Datenverarbeitungseinheit (1) ist darüber hinaus ein ein Mikrophon (3) umfassendes Sprachmodul verbunden;
- es ist ein Signalelement (4) vorgesehen, das bei Ausbleiben verwertbarer Positionsdaten aktiviert wird;
- das Sprachmodul ist bei Ausbleiben verwertbarer Positionsdaten mittels eines Schalters (5) auf die zentrale Datenverarbeitungseinheit (1) schaltbar;
- die zentrale Datenverarbeitungseinheit (1) umfaßt mindestens eine Speichereinrichtung (7) (Istroutenspeicher), in der die vom Satellitenempfänger (2) ermittelten Positionsdaten und beim Ausbleiben solcher die über das Sprachmodul eingegebenen Routen-Informationen abgespeichert werden.

2. Kraftfahrzeug nach Anspruch 1,
dadurch gekennzeichnet,
daß der Schalter (5) beim Ausbleiben verwertbarer Positionsdaten selbsttätig das Mikrophon (3) auf die zentrale Datenverarbeitungseinheit (1) schaltet.

3. Kraftfahrzeug nach Anspruch 1,
dadurch gekennzeichnet,
daß das Sprachmodul einen Sprachprozessor umfaßt, der einen AD-Wandler (6) aufweist.

4. Kraftfahrzeug nach Anspruch 1,
dadurch gekennzeichnet,
daß die zentrale Datenverarbeitungseinheit (1) eine weitere Speichereinrichtung (9) (Sollroutenspeicher) umfaßt zur Abspeicherung von Orts- bzw. Wegdaten, welche den Verlauf einer vorgegebenen Einsatzroute wiedergeben.

5. Kraftfahrzeug nach Anspruch 4,
dadurch gekennzeichnet,
daß die zentrale Datenverarbeitungseinheit (1) eine Vergleichseinheit (8) umfaßt, welche die vom Satellitenempfänger (2) ermittelten Positionsdaten mit den im Sollroutenspeicher (9) abgespeicherten Orts- bzw. Wegedaten vergleicht.

6. Kraftfahrzeug nach Anspruch 5,
dadurch gekennzeichnet,
daß in dem Istroutenspeicher (7) nur die über das Sprachmodul eingegebenen Routeninformationen sowie solche vom Satellitenempfänger (2) ermittelten Positionsdaten abgespeichert werden, die nicht mit den im Sollroutenspeicher (9) abgespeicherten Orts- bzw. Wegdaten übereinstimmen.

7. Kraftfahrzeug nach Anspruch 4,
gekennzeichnet durch eine Anzeigeeinheit (12) zur Anzeige der jeweils bevorstehenden, sich aus den im Sollroutenspeicher (9) abgespeicherten Orts- bzw. Wegdaten ergebenden Sollroute.

8. Kraftfahrzeug nach Anspruch 4,
gekennzeichnet durch einen mit dem Sollroutenspeicher (9) verbundenen Sollbetriebsdatenspeicher (10), in dem den Orts- bzw. Wegdaten des Sollroutenspeichers (9) zugeordnet Sollbetriebsdaten eines dem Fahrzeug zugeordneten Arbeitsaggregates (11) abgespeichert sind.

9. Kraftfahrzeug nach Anspruch 8,
gekennzeichnet durch eine mit dem Sollbetriebsdatenspeicher (10) und dem Sollroutenspeicher (9) verbundene Anzeigeeinheit (12), auf der die der Position des Fahrzeuges zugeordneten Sollbetriebsdaten des Aggregates (11) angezeigt werden.

10. Kraftfahrzeug nach Anspruch 8,
gekennzeichnet durch eine mit dem Sollbetriebsdatenspeicher (10) und dem Arbeitsaggregat (11) verbundene Steuereinheit (13), die das Arbeitsaggregat (11) in Abhängigkeit von den der Position des Fahrzeuges zugeordneten Sollbetriebsdaten steuert.

11. Kraftfahrzeug nach Anspruch 1,
gekennzeichnet durch einen Istbetriebsdatenspeicher (14) zur Aufzeichnung der den jeweiligen Positionsdaten zugeordneten Istbetriebsdaten eines Arbeitsaggregats (11).

12. Kraftfahrzeug nach Anspruch 1,
dadurch gekennzeichnet,
daß der Istroutenspeicher (7) einen Chipkartenschreiber umfaßt.

## Claims

1. Motor vehicle, in particular a road service vehicle, with a device for recording the travelling routes with the following features:
- a satellite receiver (2) is provided, which continuously ascertains the positional data corresponding to the momentary position of the vehicle;
- the satellite receiver (2) is connected to a central data-processing unit (1);
- also connected to the central data-processing unit (1) is a speech module comprising a microphone (3);
- a signal member (4) is provided which is activated in the absence of utilisable positional data;
- in the absence of utilisable positional data, the speech module can be connected by means of a switch (5) to the central data-processing unit (1);
- the central data-processing unit (1) comprises at least one memory (7) (actual route memory), in which the positional data ascertained by the satellite receiver (2) and in the absence of such the route information introduced by way of the speech module are memorised.

2. Motor vehicle according to Claim 1, characterised in that in the absence of utilisable positional data, the switch (5) automatically connects the microphone (3) to the central data-processing unit (1).

3. Motor vehicle according to Claim 1, characterised in that the speech module comprises a speech processor, which has an analog-to-digital converter (6).

4. Motor vehicle according to Claim 1, characterised in that the central data-processing unit (1) comprises a further memory (9) (desired route memory) for memorising data relating to place or distance, which reproduce the course of a given operative route.

5. Motor vehicle according to Claim 4, characterised in that the central data-processing unit (1) comprises a comparison unit (8), which compares the positional data ascertained by the satellite receiver (2) with the data relating to place or distance memorised in the desired route memory (9).

6. Motor vehicle according to Claim 5, characterised in that only the route information introduced by way of the speech module as well as such positional data ascertained by the satellite receiver (2) are memorised in the actual route memory (7), which information does not correspond to the data relating to place or distance memorised in the desired route memory (9).

7. Motor vehicle according to Claim 4, characterised by an indicator unit (12) for indicating the respective imminent desired route resulting from the data relating to place or distance memorised in the desired route memory (9).

8. Motor vehicle according to Claim 4, characterised by a desired operating data memory (10) connected to the desired route memory (9), in which the desired operating data of a working unit (11) associated with the vehicle, which data are associated with the data relating to place or distance of the desired route memory (9), are memorised.

9. Motor vehicle according to Claim 8, characterised by an indicator unit (12) connected to the desired operating data memory (10) and the desired route memory (9), on which the desired operating data of the unit (11) associated with the position of the vehicle are indicated.

10. Motor vehicle according to Claim 8, characterised by a control unit (13) connected to the desired operating data memory (10) and the working unit (11), which controls the working unit (11) depending on the desired operating data associated with the position of the vehicle.

11. Motor vehicle according to Claim 1, characterised by an actual operating data memory (14) for recording the actual operating data of a working unit (11) associated with the respective positional data.

12. Motor vehicle according to Claim 1, characterised in that the actual route memory (7) comprises a chip card writer.

## Revendications

1. Véhicule automobile, notamment véhicule de service de voirie, équipé d'un dispositif pour l'enregistrement d'itinéraires présentant les caractéristiques suivantes:
- il est prévu un récepteur (2) de signaux de satellites qui détermine en continu des données de position correspondant à la position instantanée du véhicule;
- le récepteur de signaux de satellites (2) est relié à une unité (1) centrale de traitement de données;
- un module vocal qui comprend un microphone (3) est en outre connecté à l'unité (1) centrale de traitement de données;
- il est prévu un élément avertisseur (4) qui est activé en cas d'absence de données de position exploitables;
- le module vocal, en cas d'absence de données de position exploitables, peut être connecté à l'unité (1) centrale de traitement de données à l'aide d'un commutateur (5);
- l'unité (1) centrale de traitement de données comprend au moins un dispositif de mémoire (7) (mémoire d'itinéraire effectif) dans lequel sont mémorisées les données de position déterminées par le récepteur de signaux de satellites (2) et, en l'absence de celles-ci, les informations d'itinéraire entrées à l'aide du module vocal.

2. Véhicule automobile selon la revendication 1, caractérisé par le fait que le commutateur (5), en l'absence de données de position exploitables, connecte automatiquement le microphone (3) à l'unité (1) centrale de traitement de données.

3. Véhicule automobile selon la revendication 1, caractérisé par le fait que le module vocal comprend un processeur vocal qui comporte un convertisseur analogique/numérique.

4. Véhicule automobile selon la revendication 1, caractérisé par le fait que l'unité (1) centrale de traitement de données comporte un dispositif de mémoire (9) supplémentaire (mémoire d'itinéraire de consigne) pour mémoriser des données de lieu et de trajet qui reproduisent le tracé d'un itinéraire prédéterminé d'intervention.

5. Véhicule automobile selon la revendication 4, caractérisé par le fait que l'unité (1) centrale de traitement de données comprend une unité comparatrice (8) qui compare les données de position déterminées par le récepteur de signaux de satellites (2) avec les données de lieu et les données de trajet mémorisées dans la mémoire d'itinéraire de consigne (9).

6. Véhicule automobile selon la revendication 5, caractérisé par le fait que seules sont mémorisées dans la mémoire d'itinéraire effectif (7) les informations d'itinéraire entrées par le biais du module vocal ainsi que les données de position déterminées par le récepteur de signaux de satellites (2) qui ne correspondent pas aux données de lieu et de trajet mémorisées dans la mémoire d'itinéraire de consigne (9).

7. Véhicule automobile selon la revendication 4, caractérisé par une unité d'affichage (12) pour l'affichage de l'itinéraire de consigne prévu qui résulte des données de lieu et de trajet mémorisées dans la mémoire d'itinéraire de consigne (9).

8. Véhicule automobile selon la revendication 4, caractérisé par une mémoire (10) de données de fonctionnement de consigne qui est connectée à la mémoire d'itinéraire de consigne (9) et dans laquelle sont mémorisées des données de fonctionnement de consigne pour un module de travail (11) associées aux données de lieu et de trajet mémorisées dans la mémoire d'itinéraire de consigne (9) .

9. Véhicule automobile selon la revendication 8, caractérisé par une unité d'affichage (12) qui est connectée à la mémoire (10) de données de fonctionnement de consigne et à la mémoire d'itinéraire de consigne (9) et sur laquelle sont affichées les données de fonctionnement de consigne du module de travail (11) associées à la position du véhicule.

10. Véhicule automobile selon la revendication 8, caractérisé par une unité de commande (13) qui est reliée à la mémoire (10) de données de fonctionnement de consigne et au module de travail (11) et commande le module de travail (11) en fonction des données de fonctionnement de consigne associées à la position du véhicule.

11. Véhicule automobile selon la revendication 1, caractérisé par une mémoire (14) de données de fonctionnement effectives pour l'enregistrement des données de fonctionnement effectives du module de travail (11) associées aux données de position concernées.

12. Véhicule automobile selon la revendication 1, caractérisé par le fait que la mémoire (7) d'itinéraire effectif comprend un enregistreur de cartes à puces.
